(19) **Europäisches Patentamt**

**European Patent Office**

**Office européen des brevets**

(11) **EP 1 437 824 A1**

(12) **DEMANDE DE BREVET EUROPEEN**

(43) Date de publication:
**14.07.2004 Bulletin 2004/29**

(51) Int Cl.⁷: **H02M 3/335**

(21) Numéro de dépôt: **03290051.6**

(22) Date de dépôt: **09.01.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(71) Demandeur: **Barthélémy, Fabrice**
**91300 Massy (FR)**

(72) Inventeur: **Barthélémy, Fabrice**
**91300 Massy (FR)**

(54) **Convertisseur de tension apte à délivrer plusieurs très basses tensions continues de sécurité**

(57) Le convertisseur de tension (2) apte à délivrer en sortie plusieurs très basses tensions continues de sécurité comprend un convertisseur indirect (6). Ledit convertisseur indirect (6) comporte, d'une part, un transformateur (24) équipé, d'un enroulement primaire et d'un seul enroulement secondaire (28) à partir duquel sont délivrées lesdites plusieurs très basses tensions continues de sécurité, et d'autre part, un interrupteur (42) raccordé à l'enroulement primaire (26). Le convertisseur de tension (2) comporte un premier circuit de sélection (60) d'une très basse tension continue de sécurité parmi lesdites plusieurs très basses tensions continues de sécurité, et un circuit de pilotage (58) adapté pour modifier le temps de conduction de l'interrupteur (42) sous la commande dudit premier circuit de sélection (60) en fonction de ladite très basse tension continue de sécurité sélectionnée.

FIG.2

## Description

L'invention concerne un convertisseur de tension apte à délivrer plusieurs très basses tensions continues de sécurité comprenant un convertisseur indirect.

Par très basse tension de sécurité (TBTS) on attend ici, par exemple des tensions conformes à la norme NF EN60950, soit des tensions comprises entre 0 et 60V.

De manière connue, des convertisseurs de tension aptes à délivrer plusieurs très basses tensions continues de sécurité, à partir d'une source de tension alternative comportent :

- un redresseur de tension alternative,
- un convertisseur indirect, également plus connu sous les termes de convertisseur Flyback, et
- des moyens de commande pour sélectionner une tension continue de sortie parmi les tensions continues de sortie possibles du convertisseur indirect en réponse à un signal de commande.

Le redresseur de tension alternative est adapté pour délivrer en entrée du convertisseur indirect, une tension continue redressée. Le redresseur est typiquement raccordé en entrée à une source de tension alternative comprise entre 80 et 250 $V_{ac}$.

Le convertisseur indirect comporte un transformateur équipé de plusieurs enroulements secondaires. Chaque enroulement secondaire est associé à un circuit électronique de sortie respectif de manière à délivrer l'une des tensions continues de sortie possibles à partir de la tension présente aux bornes de l'enroulement secondaire correspondant. Pour cela, chaque enroulement secondaire comporte un nombre de spires différent de celui des autres enroulements secondaires.

Les moyens de commande sont aptes à sélectionner, en réponse au signal de commande, une des tensions continues de sortie délivrées à partir des enroulements secondaires.

Ainsi, lorsqu'un utilisateur souhaite modifier la tension continue de sortie du convertisseur, il agit sur les moyens de commande pour sélectionner l'enroulement secondaire délivrant la tension continue de sortie qu'il désire obtenir.

Les convertisseurs de tension comportant un convertisseur indirect apte à délivrer plusieurs très basses tensions de sécurité sont formés à partir de composants électroniques, à l'exception du transformateur, qui se présentent sous la forme de petits circuits intégrés. Par conséquent, l'encombrement de ces convertisseurs est principalement déterminé par la taille du transformateur et le nombre de circuits électroniques de sortie correspondant à chacun des enroulements secondaires. Ainsi,

L'encombrement de ces convertisseurs est particulièrement imposant à cause de la présence de plusieurs enroulements secondaires. Cet inconvénient limite les applications possibles de ces convertisseurs de tension. Par exemple, ces convertisseurs sont difficilement utilisables pour réaliser des prises murales aptes à délivrer plusieurs tensions continues dans la gamme des très basses tensions à partir d'une alimentation secteur. Par boîtier de prise murale standard on désigne, par exemple, un boîtier de 60 mm de diamètre et de 30 mm de profondeur.

On connaît encore d'après le EP 0 991 171 A, un convertisseur de tension dans lequel le secondaire du transformateur comprend un seul enroulement, et on fait varier la tension produite en ouvrant et en fermant un interrupteur monté en série avec l'enroulement primaire. Suivant ce document, il s'agit d'optimiser le convertisseur dans le sens consistant à lui permettre de fournir une puissance de sortie égale pour tous les niveaux de tension de sortie, tels qu'ils sont définis par un dispositif de réglage.

Les moyens mis en oeuvre consistent en une régulation d'intensité maximale du courant traversant le primaire du transformateur dans les intervalles de temps de conduction du transistor servant d'interrupteur.

Dans les phases de conduction, le courant monte de la valeur zéro jusqu'à une valeur maximale qui est définie de manière variable par un comparateur.

La technologie décrite dans le document cité serait mal adaptée pour réaliser un convertisseur du type voulu selon l'invention, c'est à dire capable de fournir l'une au choix parmi plusieurs très basses tensions continues de sécurité.

L'idée consistant, comme le propose le document, à optimiser dans le sens d'une égalisation de la puissance disponible quel que soit le niveau de tension, est elle-même inappropriée pour un dispositif du genre visé par l'invention.

En effet, les appareils à recharger ont en général une puissance d'autant plus faible que leur tension nominale de fonctionnement est elle-même faible.

En outre, le fait d'admettre de fortes intensités pour de faibles tensions oblige à dimensionner en conséquence les composants dont le dimensionnement est fonction de l'intensité maximale qui est susceptible de les parcourir.

En outre, les spécifications de tolérance et de bruit par rapport à la tension nominale ont des valeurs d'autant plus faibles que la tension nominale est elle-même faible. Cette exigence n'est pas satisfaite par le dispositif selon le EP 0 991 171 A.

L'invention vise à remédier à cet inconvénient en proposant un convertisseur de tension comportant un convertisseur indirect apte à délivrer plusieurs très basses tensions continues de sécurité dont l'encombrement et le coût sont réduits.

L'invention a donc pour objet un convertisseur de tension apte à délivrer en sortie plusieurs très basses tensions continues de sécurité comprenant un convertisseur indirect, ledit convertisseur indirect comportant, d'une part un transformateur équipé d'un enroulement primaire adapté pour être raccordé à une source de tension continue d'entrée et, d'autre part, un interrupteur raccordé à l'enroulement primaire dont le temps de conduction est contrôlable, le convertisseur de tension comportant en outre un circuit de pilotage du temps de conduction de l'interrupteur, caractérisé en ce qu'il comporte, raccordé au circuit de pilotage, un premier circuit de sélection d'une très basse tension continue de sécurité parmi lesdites plusieurs très basses tensions continues de sécurité, en ce que le circuit de pilotage est adapté pour modifier le temps de conduction de l'interrupteur sous la commande dudit premier circuit de sélection en fonction de ladite très basse tension continue de sécurité sélectionnée, en ce que le transformateur comporte un seul enroulement secondaire à partir duquel sont délivrées lesdites plusieurs très basses tensions continues de sécurité, et en ce que le circuit de pilotage commande un mode de fonctionnement où le courant dans l'enroulement primaire a une valeur sensiblement nulle au début de chaque intervalle de temps de conduction, ou sélectivement un mode de fonctionnement où le courant a une valeur non-nulle au début de chaque intervalle de temps de conduction.

On réalise ainsi :

- au secondaire, une puissance maximale élevée pour les tensions de sortie élevées, conformément aux besoins de ce type de convertisseur ; et
- au primaire, une minimisation du courant en faisant démarrer à une valeur de courant non-nulle l'intervalle de temps de conduction lorsque la puissance appelée au secondaire augmente.

En effet, la puissance fournie par le primaire correspond essentiellement à l'aire du chronogramme du courant traversant le primaire et, pour une puissance donnée le fait que l'intensité de départ soit supérieure à zéro permet de réduire l'intensité à la fin de chaque intervalle de temps de conduction.

L'invention permet ainsi de réduire la taille et le coût des composants pour une même puissance maximale de sortie.

L'invention propose ainsi de dimensionner un convertisseur apte à délivrer plusieurs très basses tensions, fonctionnant dans les deux modes décrits ci-dessus, ce qui présente les avantages de :

Fonctionner en mode continu pour les plus petites tensions, ce qui permet de

- réduire l'ondulation du courant en jeu dans tous les composants du circuit de puissance
- réduire le filtrage par rapport au mode discontinu (réduction du bruit, réduction de la taille des composants)
- limiter naturellement le courant de court-circuit en sortie (la puissance augmente comme la tension de sortie).

Fonctionner en mode discontinu pour les tensions les plus élevées avec l'avantage de :

- nécessiter des composants ayant une tenue en tension raisonnable
- fonctionner avec des temps morts raisonnables (réduction de la taille des composants de filtrage).

Le courant est le paramètre essentiel dans le dimensionnement des semi-conducteurs de puissance, aussi le fait de fonctionner avec un courant maximum constant quelle que soit la tension de sortie, permet de choisir des composants dont les performances seront pleinement exploitées sur toute la gamme de tension de sortie. Le courant est aussi un facteur déterminant pour la construction du transformateur et notamment pour la section du bobinage.

Finalement, l'association de ces deux modes de fonctionnement permet la construction d'un convertisseur indirect apte à délivrer plusieurs très basses tensions sur une large plage de variation en cumulant les bénéfices des deux modes pour chaque gamme de tension. En outre, la réduction des contraintes électriques permet une réduction de la taille des composants.

Suivant d'autres caractéristiques de l'invention :

- le convertisseur de tension comporte un second circuit de sélection d'une intensité maximale de courant en sortie du convertisseur de tension, et le circuit de pilotage est adapté pour être contrôlé par le second circuit de sélection en fonction de la-dite intensité maximale de courant en sortie du convertisseur ;
- le convertisseur de tension comporte un redresseur raccordé à l'entrée du convertisseur indirect et ledit redresseur est adapté pour être raccordé à la sortie d'une source de tension alternative ;
- le convertisseur de tension est apte à délivrer plusieurs très basses tensions continues de sécurité comprises entre 3 $V_{dc}$ et 42 $V_{dc}$ à partir d'une tension alternative comprise entre 190 $V_{dc}$ et 250 $V_{ac}$ présente en entrée du redresseur, et le rapport d'enroulement m du nombre de spires de l'enroulement secondaire sur le nombre de spires de l'enroulement primaire est compris entre 0,036 et 0,65 ;

- le convertisseur de tension est apte à délivrer plusieurs très basses tensions continues de sécurité comprises entre 3 $V_{dc}$ et 24 $V_{dc}$ à partir d'une tension alternative comprise entre 190 $V_{ac}$ et 250 $V_{ac}$ présente en entrée du redresseur, et le rapport d'enroulement m du nombre de spires de l'enroulement secondaire sur le nombre de spires de l'enroulement primaire est compris entre 0.02 et 0.45.

- le convertisseur de tension est apte à délivrer plusieurs très basses tensions continues de sécurité comprises entre 3 $V_{dc}$ et 12 $V_{dc}$ à partir d'une tension alternative comprise entre 190 $V_{ac}$ et 250 $V_{ac}$ présente en entrée du redresseur, et le rapport d'enroulement m du nombre de spires de l'enroulement secondaire sur le nombre de spires de l'enroulement primaire est compris entre 0,01 et 0,2 ;

- le convertisseur de tension est apte à délivrer plusieurs très basses tensions continues de sécurité comprises entre 3 $V_{dc}$ et 42 $V_{dc}$ à partir d'une tension alternative comprise entre 80 $V_{ac}$ et 150 $V_{ac}$ présente en entrée du redresseur et le rapport d'enroulement m du nombre de spires de l'enroulement secondaire sur le nombre de spires de l'enroulement primaire est compris entre 0,03 et 0,6.

- le convertisseur de tension est apte à délivrer plusieurs très basses tensions continues de sécurité comprises entre 3 $V_{dc}$ et 24 $V_{dc}$ à partir d'une tension alternative comprise entre 80 $V_{ac}$ et 150 $V_{ac}$ présente en entrée du redresseur, le rapport d'enroulement m du nombre de spires de l'enroulement secondaire sur le nombre de spires de l'enroulement primaire est compris entre 0,015 et 0,35.

- le convertisseur de tension est apte à délivrer plusieurs très basses tensions continues de sécurité comprises entre 3 $V_{dc}$ et 12 $V_{dc}$ à partir d'une tension alternative comprise entre 80 $V_{ac}$ et 150 $V_{ac}$ présente en entrée du redresseur, et le rapport d'enroulement m du nombre de spires de l'enroulement secondaire sur le nombre de spires de l'enroulement primaire est compris entre 0,008 et 0,2.

- ledit convertisseur indirect comporte une diode dont l'anode est raccordée à une première extrémité de l'enroulement secondaire et dont la cathode est raccordée à une première borne de sortie des très basses tensions continues de sécurité, et le convertisseur de tension comporte un rapport d'enroulement m entre le nombre de spires de l'enroulement secondaire sur le nombre de spires de l'enroulement primaire déterminé à partir de la relation suivante :

$$m = [(V_{0\min} + V_{d1})/(V_{e\min} - V_{ds})] \cdot [(V_{e\min} - V_{ds})/((K_{rp}\, L_P \cdot I_p \cdot f)) - 1]$$

où :
- $V_{0\min}$ est la plus petite très basse tension continue de sécurité en sortie du convertisseur de tension,
- $V_{d1}$ est la chute de tension aux bornes de la diode lorsque celle-ci conduit,
- $V_{e\min}$ est le minimum de la tension continue en entrée du convertisseur indirect (6);
- $V_{ds}$ est la chute de tension aux bornes de l'interrupteur lorsque celui-ci conduit,
- $L_P$ est l'inductance de l'enroulement primaire,
- $I_P$ est l'intensité maximale du courant traversant l'interrupteur;
- $f$ est la fréquence de fonctionnement de l'interrupteur,
- $K_{rp}$ est le rapport entre l'amplitude maximale des variations de l'intensité du courant traversant l'interrupteur et l'intensité maximale $I_p$ du courant traversant ce même interrupteur.

L'invention a également pour objet une prise murale caractérisée en ce qu'elle comporte un convertisseur de tension conforme à l'invention.

Dans un convertisseur de tension tel que celui décrit ci-dessus l'ensemble des enroulements secondaires utilisés est remplacé par un seul enroulement secondaire et un circuit de réglage de la tension continue en sortie de cette unique enroulement secondaire. L'encombrement du transformateur est donc réduit puisque celui-ci ne comporte plus qu'un seul enroulement secondaire. De plus, l'encombrement du circuit de réglage peut aisément être réduit à un encombrement inférieur à celui d'un enroulement secondaire, par exemple en utilisant des circuits intégrés. Ainsi, l'encombrement total du convertisseur décrit ci-dessus est inférieur à celui d'un convertisseur équivalent comportant plusieurs enroulements secondaires. Il est dès lors possible de réduire l'encombrement d'un tel convertisseur à une taille suffisamment petite pour être logé à l'intérieur d'un boîtier de prise murale standard.

D'autres caractéristiques et avantages ressortiront à la lecture de la description suivante, donnée uniquement à titre d'exemple, et faite en se référant aux dessins sur lesquels :

- la figure 1 est un circuit électronique d'un convertisseur de tension conforme à l'invention ;
- La figure 2 est un chronogramme de l'évolution de différentes grandeurs caractéristiques du fonctionnement d'un convertisseur conforme à l'invention ; et

- la figure 3 est un procédé de détermination du nombre de spires des enroulements primaires et secondaires d'un transformateur utilisé dans un convertisseur de tension conforme à l'invention.

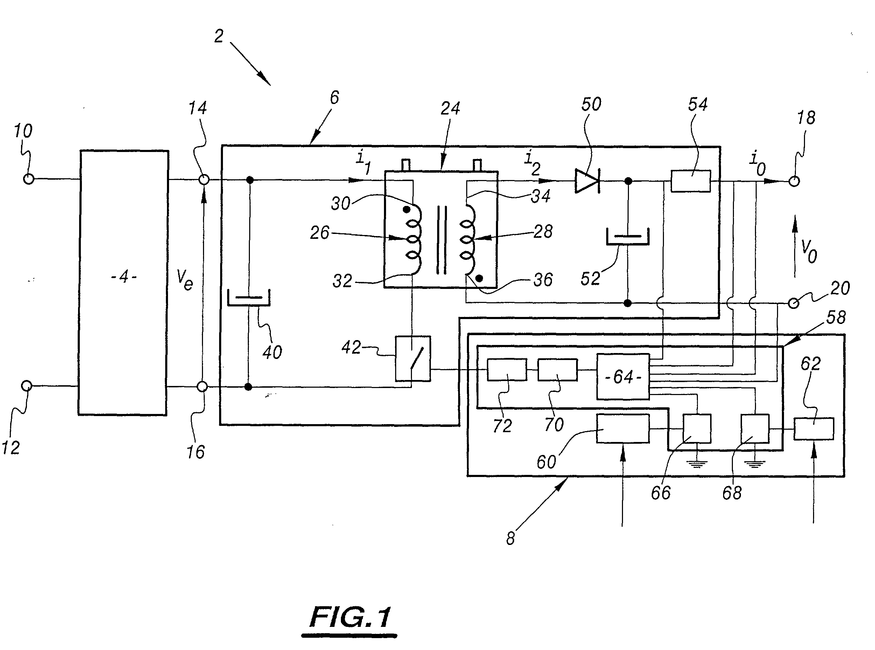

La figure 1 illustre un convertisseur de tension 2 apte à délivrer plusieurs très basses tensions de sécurité. Ce convertisseur de tension 2 comporte un redresseur 4 de tension classique, un convertisseur indirect 6, et un circuit de réglage 8.

Le redresseur 4 est raccordé, d'une part, à une première et à une seconde bornes 10, 12 d'entrée de tension alternative, et d'autre part, à une première et à une seconde bornes 14, 16 d'entrée de tension redressée. La tension redressée présente entre les bornes 14, 16 est notée $V_e$. Les bornes 10, 12 sont raccordées à une source de tension alternative comprise entre 190 $V_{ac}$ et 250 $V_{ac}$ (non représentée).

Le convertisseur indirect 6 est apte à transformer la tension redressée $V_e$ présente entre les bornes 14 et 16 en une tension continue, notée $V_0$, différente présente entre une première et une seconde bornes 18, 20 de sortie de très basses tensions continues de sécurité.

La structure générale des convertisseurs indirects étant connue, seuls les éléments spécifiques à l'invention seront décrits ici. Pour plus d'information sur la structure générale des convertisseurs indirects, le lecteur pourra par exemple se référer au document D1 suivant :

« Alimentations à découpage », Michel GIRARD, Edi-science, 1993.

Le convertisseur indirect 6 comporte essentiellement un circuit d'entrée relié par l'intermédiaire d'un transformateur 24 à un circuit de sortie.

Le transformateur 24 comporte un enroulement primaire 26 de $n_1$ spires et un unique enroulement secondaire 28 de $n_2$ spires. L'enroulement primaire comporte une première et une seconde extrémités 30, 32. L'enroulement secondaire 28 comporte seulement une première et une seconde extrémités 34, 36.

Les enroulements primaire et secondaire sont bobinés en sens inverse. Par la suite, l'inductance de l'enroulement primaire 26 sera notée $L_p$ et le rapport d'enroulement, noté m, est défini par la relation suivante : $m=\dfrac{n_2}{n_1}$.

En variante, le transformateur 24 comporte un second enroulement secondaire destiné à alimenter le circuit de réglage 8. Aucune très basse tension continue de sécurité n'est délivrée à partir de ce second enroulement secondaire pour alimenter une charge destinée à être raccordée en sortie du convertisseur de tension.

Le circuit d'entrée est raccordé d'une part aux bornes 14, 16 d'entrée de tension redressée, et d'autre part, à la première à la seconde extrémités 30, 32 de l'enroulement primaire 26.

Ce circuit d'entrée comporte un condensateur de lissage 40 et un interrupteur contrôlable 42. Le condensateur 40 est raccordé, d'une part, à la borne 14 d'entrée de tension redressée et à l'extrémité 30 de l'enroulement primaire 26, et d'autre part à la borne 16 d'entrée de tension redressée. L'interrupteur 42 est raccordé entre la seconde extrémité 32 de l'enroulement primaire 26 et la borne 16 d'entrée de tension redressée.

L'interrupteur 42 est caractérisé par les grandeurs suivantes :

- la tension maximale entre ses bornes dans l'état ouvert, notée $V_{S1}$ ;
- la chute de tension entre ses bornes dans l'état passant, notée $V_{ds}$ ;
- sa fréquence de fonctionnement, notée $f$, c'est-à-dire la fréquence d'ouverture et de fermeture de l'interrupteur ; et
- l'intensité maximale du courant circulant entre ses bornes, notée $I_P$.

L'interrupteur 42 comporte une entrée de commande reliée à la sortie du circuit de réglage 8. Cette entrée de commande est destinée à recevoir un signal de commande pour régler le temps de conduction par période de fonctionnement de l'interrupteur 42. Le signal de commande est ici un signal dont la largeur d'impulsion est modulée, également appelé signal de commande PWM (Pulse Width Modulation).

L'interrupteur 42 est, par exemple un composant de la famille "Topswitch" de l'entreprise « Power Integrations » (Power Integrations, Inc., 477 N. Mathilda Avenue, Sunnyvale, CA 94086).

Le circuit de sortie est raccordé à chaque extrémité de l'enroulement secondaire 28 et comporte une diode de redressement 50, un condensateur de lissage 52, et une résistance 54 de mesure de courant.

L'anode de la diode 50 est raccordée à la première extrémité 34 de l'enroulement secondaire 28 tandis que sa cathode est raccordée à une première borne de la résistance 54.

Le condensateur 52 est raccordé, d'une part, à la première borne de la résistance 54 et, d'autre part, à la borne 20 de sortie de très basses tensions continues de sécurité et à la seconde extrémité 36 de l'enroulement secondaire 28.

Une seconde borne de la résistance 54 est raccordée à la borne 18 de sortie de très basses tensions continues de sécurité.

Dans le convertisseur indirect 6 précédemment décrit, le courant circulant de l'extrémité 30 vers l'extrémité 32 de l'enroulement primaire 26 est noté $i_1$ tandis que le courant circulant de l'extrémité 36 vers l'extrémité 34 de l'enroulement secondaire 28 est noté $i_2$. Le courant circulant en sortie de la résistance 54 est noté $i_0$.

Le circuit de réglage 8 est apte à générer le signal de commande PWM pour contrôler le temps de conduction par période de fonctionnement de l'interrupteur 42. Ce circuit de réglage 8 comprend un circuit de pilotage 58 associé à un premier et à un second circuits de sélection 60 et 62.

Le circuit de pilotage 58 est destiné à commander le temps de conduction par période de fonctionnement de l'interrupteur 42. Ici, il comprend un circuit intégré 64, par exemple, un composant « TSM101 » de la société « ST Microelectronics » (Worldwide Headquarters, 165, rue Edouard Branly, BP112 - Technoparc du Pays de Gex, F-01637 Saint-Genis-Pouilly cedex, France). Ce circuit intégré est apte à délivrer en sortie un signal analogique en fonction des écarts mesurés entre la tension continue de sortie $V_0$ et une référence de tension et limite le courant continu de sortie $i_0$ en fonction de la valeur d'une référence de courant.

Pour cela, le circuit intégré 64 est raccordé en entrée, d'une part, aux bornes 18 et 20 de sortie de très basses tensions continues de sécurité et, d'autre part, à une référence de tension 66. La référence de tension 66 est adaptée pour que sa valeur soit contrôlable à l'aide du premier circuit de sélection 60.

Le circuit intégré 64 est également raccordé aux bornes de la résistance 54 de mesure de courant et à une référence de courant 68. La référence de courant 68 est adaptée pour que sa valeur soit contrôlable à l'aide du second circuit de sélection 62.

La sortie du circuit intégré 64 est raccordée à l'interrupteur 42 par l'intermédiaire d'un circuit d'isolation 70 et d'un régulateur PWM 72 pour transmettre le signal de commande généré.

Le circuit d'isolation 70 est raccordé à la sortie du circuit intégré 64. Il est destiné à isoler le circuit intégré 64 du circuit d'entrée du transformateur 24.

Le circuit régulateur PWM 72 est raccordé à la sortie du circuit d'isolation 70 et à l'entrée de commande de l'interrupteur 42. Ce régulateur est apte à convertir le signal analogique délivré par le circuit intégré 64 en un signal de commande PWM.

Avantageusement un tel circuit 72 est intégré avec l'interrupteur 42 dans un même composant. C'est le cas lorsque l'interrupteur 42 est un interrupteur de la famille "Topswitch" de l'entreprise "Power Integrations".

Le premier et le second circuits de sélection 60, 62 sont respectivement destinés à sélectionner la très basse tension $V_0$ et l'intensité maximale $i_0$ en sortie du convertisseur 2.

Pour cela le premier et le second circuits de sélection 60, 62 sont respectivement raccordés à la référence de tension 66 et à la référence de courant 68. Par exemple, le premier et le second circuits de sélection 60, 62 comportent chacun un commutateur manoeuvrable par un opérateur de sorte que la très basse tension de sortie $V_0$ est l'intensité maximale du courant $i_0$ puissent être sélectionnées par un opérateur.

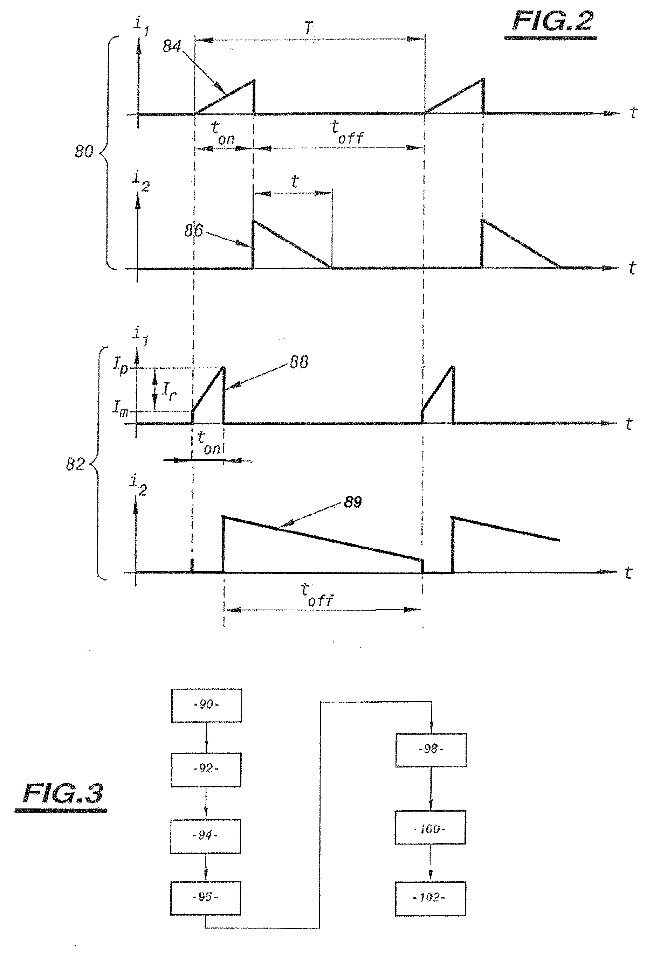

La figure 2 comporte deux chronogrammes 80, 82. Ces chronogrammes sont ici utilisés pour définir des grandeurs qui seront utilisées lors de la description du procédé de la figure 3. Le chronogramme 80 comporte deux courbes 84, 86 représentant respectivement les variations de l'intensité du courant $i_1$ et du courant $i_2$ pendant une période de fonctionnement de l'interrupteur 42, notée $T$.

Au début de la période $T$, l'intensité du courant $i_1$ est nulle. Ensuite pendant un laps de temps, noté $t_{on}$, l'intensité du courant $i_1$ croît. Ce laps de temps $t_{on}$ correspond au laps de temps pendant lequel l'interrupteur 42 est fermé, c'est-à-dire qu'il correspond au temps de conduction de l'interrupteur 42. A la fin du laps de temps $t_{on}$ l'intensité du courant $i_1$ s'annule de nouveau, ce qui correspond à l'ouverture de l'interrupteur 42. Ensuite l'intensité $i_1$ reste nulle jusqu'à la fin de la période $T$, c'est-à-dire pendant un laps de temps noté $t_{off}$.

Au début de la période $T$, l'intensité $i_2$ est nulle tant que l'interrupteur 42 conduit, c'est-à-dire pendant le laps de temps $t_{on}$. A l'issue de ce laps de temps, l'intensité $i_2$ passe subitement à une valeur non nulle. Ensuite l'intensité $i_2$ décroît progressivement à partir de cette valeur non nulle jusqu'à une valeur nulle pendant un laps de temps noté $t$. Ce laps de temps $t$ est inférieur au laps de temps $t_{off}$ de sorte que l'intensité $i_2$ s'annule avant la fin de la période T. Dans une telle situation le fonctionnement du convertisseur indirect 6 est dit "en mode discontinu".

Le chronogramme 82 comporte deux courbes 88, 89 représentant les variations de l'intensité du courant $i_1$ et du courant $i_2$ pendant une période $T$ de fonctionnement du convertisseur indirect 6 dans le cas où le convertisseur indirect 6 fonctionne dans un mode dit « continu ». Dans un tel mode de fonctionnement l'intensité $i_1$ possède une valeur, non nulle, notée $I_m$, au début de la période $T$. Ensuite de façon similaire à la courbe 84, l'intensité $i_1$ croît pendant le laps de temps $t_{on}$ jusqu'à une valeur maximale, notée $I_p$. Ensuite l'évolution de l'intensité $i_1$ est identique à celle de la courbe 84.

Au début de la période $T$, l'intensité $i_2$ est nulle tant que l'interrupteur 42 conduit, c'est à dire pendant le laps de temps $t_{on}$. A l'issue de ce laps de temps, l'intensité $i_2$ passe subitement à une valeur non nulle. Ensuite l'intensité $i_2$ décroît progressivement à partir de cette valeur non nulle pendant un laps de temps $t_{off}$ jusqu'à une valeur non nulle au début de la période $T$ suivante, moment où $i_2$ chute subitement à 0.

Les grandeurs suivantes sont définies à partir des notations précédentes :

- $I_r$ l'amplitude maximale des variations du courant $i_1$ pendant le temps de conduction $t_{on}$, c'est-à-dire la différence entre $I_p$ et $I_m$.

- Un rapport cyclique, noté $D$, défini selon la relation suivante $D=t_{on}/T$
- Un premier rapport $K_{rp}$ défini selon la relation suivante : $K_{rp}= I_r/I_m$
- Un second rapport, noté $K_{dp}$, défini selon la relation suivante :

$$K_{dp}=(1-D)/(t*f), \text{ où } f=1/T$$

La figure 3 illustre un procédé de dimensionnement du transformateur 24 comportant sept étapes successives 90, 92, 94, 96, 98, 100 et 102.

L'étape 90 est une étape de choix de la puissance de sortie, notée $P_0$. Cette étape est suivie par l'étape 92 de choix de l'interrupteur 42 et du régulateur PWM 72 associé à celui-ci. Ce choix détermine les grandeurs $f$, $I_p$, $V_{ds}$ et $V_{S1}$ caractéristiques de l'interrupteur 42.

L'étape 94 est une étape de recherche du rapport cyclique D maximum, noté $D_{max}$, c'est à dire celui à partir duquel le convertisseur fonctionne en mode discontinu pour lequel la puissance de sortie maximum est constante quelle que soit la tension de sortie désirée. Pour cela on utilise la relation suivante :

L'étape 94 est une étape de recherche du rapport cyclique D maximum, noté $D_{max}$. Pour cela on utilise la relation suivante :

$$I_p= P_0/(D*n*V_e*(1-K_{rp}/2))$$

Le rapport cyclique maximal lorsque $K_{rp}$ est égal à 1. Par conséquent on déduit de la relation précédente la relation suivante permettant de calculer le rapport cyclique maximum $D_{max}$ :

$$D_{max}=2*P_0/(I_p*n*V_{emin})$$

où

- $n$ est le rendement du convertisseur 2, il est classiquement compris entre 0,7 et 0,9 ;
- $V_{emin}$ est le minimum de la tension redressée en entrée du convertisseur indirect ;

L'étape 96 est une étape de calcul de l'inductance $L_p$ de l'enroulement primaire 26. L'inductance $L_p$ de l'enroulement primaire 26 est calculée en fonction du rapport cyclique maximum $D_{max}$ selon la relation suivante :

$$Lp =(V_{emin} * D_{max})/(f*I_p)$$

L'étape 98 est une étape de détermination du rapport d'enroulement m du transformateur 24.

Le rapport d'enroulement m est déterminé selon la relation suivante :

$$m = [(V_{0min} + V_{d1})/(V_{emin} - V_{ds})] \cdot [(V_{emin} - V_{ds})/(K_{rp} \cdot L_P \cdot I_p \cdot f)-1]$$

où :

- $V_{0min}$ est la plus petite très basse tension continue de sécurité, c'est-à-dire la tension continue de sortie $V_0$ obtenue pour un rapport cyclique $D$ proche de 0 ;
- $V_{d1}$ est la chute de tension aux bornes de la diode 50 lorsque celle-ci conduit;
- $K_{rp}$ est le rapport défini en regard de la figure 2. Sa valeur est généralement prise égale à 0,3 car pour un rapport $K_{rp}$ trop petit, la taille du transformateur 24 augmente.

L'étape 100 est une étape de vérification de la compatibilité du rapport d'enroulement m précédemment déterminé à l'étape 98 avec le choix de l'interrupteur 42 effectué lors de l'étape 92.

En effet, il est connu que le rapport d'enroulement m précédemment déterminé fixe la tension maximale aux bornes de l'interrupteur 42. Cette tension maximale doit être inférieure à la tension maximale $V_{S1}$ que l'interrupteur 42 peut supporter. Pour cela l'inégalité suivante doit être satisfaite :

$$V_{S1} \geq V_{e\max} + V_{0\max}/m$$

- $V_{e\max}$ est le maximum de la tension redressée $V_e$,
- $V_{0\max}$ est la tension continue maximale réglable en sortie du convertisseur indirect 6.

Si l'inégalité précédente est vérifiée l'étape 102 est exécutée. Dans le cas contraire, l'étape 92 ou l'étape 90 est de nouveau exécutée en choisissant des composants ayant des grandeurs différentes de celles précédemment utilisées.

L'étape 102 est une étape de vérification que les ondulations de la tension continue obtenue en sortie du convertisseur indirect 6 ne sont pas trop importantes. Il a été déterminé expérimentalement que, pour que l'amplitude de ces ondulations de la tension continue de sortie soit acceptable, il est nécessaire que le rapport $K_{dp}$ soit inférieur à 10.

Le rapport $K_{dp}$ est calculé à partir des relations suivantes :

$$I_{sp} = I_p/m$$

$$L_S = L_p * m^2$$

$$S = V_{0\max}/Ls$$

$$t = I_{sp}/S$$

$$K_{dp} = [(1-D_{\max})/(t*f)]$$

Où:

- $I_{sp}$ est le courant maximum circulant dans la diode 50 lors du fonctionnement du convertisseur indirect 6 en mode discontinu ;
- $Ls$ est l'inductance de l'enroulement secondaire 28 ;
- $t$ est la grandeur définie en regard de la figure 2.
- $S$ est le taux de décroissance du courant $i_2$ pendant la période de temps t ;

Si le rapport $K_{dp}$ calculé n'est pas inférieur à 10, l'étape 92 et/ou l'étape 90 est de nouveau exécutée pour des composants ayant des grandeurs différentes de celles utilisées jusqu'alors.

A titre d'exemple, pour un convertisseur de tension d'une puissance de 10W apte à délivrer une tension de sortie continue comprise entre 3 $V_{dc}$ et 24 $V_{dc}$ à partir d'une tension alternative de 230 $V_{ac}$, les valeurs numériques des différentes grandeurs sont les suivantes :

- $V_{0\min}$ est égal à 3 $V_{dc}$;
- $V_{0\max}$ est égal à 24 $V_{dc}$ ;
- $V_{e\min}$ est égal à 190 $V_{dc}$ ;
- $V_{e\max}$ est égal à 340 $V_{dc}$.
- le choix d'un interrupteur dont la référence est TNY 256 produit par la société Power Intégrations, impose $V_{S1}$=700 Volts ; $I_P$ =0,45 A et $f$= 130 $KHz$ ;
- $K_{rp}$ est égale à 0,3 ;
- $n$ est égal à 0,8 ;
- $V_{d1}$ est égal à 0,5 $V$ ;
- $V_{ds}$ est égal à 10 $V$ ;
- le rapport cyclique maximum $D_{\max}$ calculé à l'étape 94 est égal à 0,29 ;
- l'inductance $L_P$ calculée à l'étape 96 est égale à 941$\mu$ $H$ ;
- la valeur de m calculée lors de l'étape 98 est égale à 0,192 ;
- la tension aux bornes de l'interrupteur 42 est égale à 465$V$, ce qui est inférieur à la tension maximale $V_{S1}$ qu'il peut supporter ;

- les valeurs calculées lors de l'étape 102 sont les suivantes :

  . $I_{sp}$ = 2,34 $A$
  . $L_S$ = 34,7$\mu H$
  . $S$ = 0,69$A/\mu s$
  . $t$ = 3,39 $\mu s$.

La valeur de $K_{dp}$ est donc égale à 1,6 ce qui est inférieur à 10 et donc acceptable pour la conception du convertisseur.

En pratique les informations suivantes ont été déterminées. Ces informations donnent le minimum et le maximum du rapport d'enroulement m en fonction des tensions continues de sortie $V_{0min}$ et $V_{0max}$ et de la tension alternative en entrée du redresseur 4.

Pour une tension alternative en entrée du redresseur 4 comprise entre 190 $V_{ac}$ de 250 $V_{ac}$ :

- Si $V_{Omin}$ est égal à 3 $V_{dc}$ et $V_{0max}$ est égal à 12 $V_{dc}$ alors $m$ est compris entre 0,01 et 0,2.
- Si $V_{Omin}$ est égal à 3 $V_{dc}$ et $V_{0max}$ est égal à 24 $V_{dc}$ alors $m$ est compris entre 0,02 et 0,45.
- $V_{Omin}$ est égal à 3 $V_{dc}$ et $V_{0max}$ est égal à 42 $V_{dc}$ alors $m$ est compris entre 0,036 et 0,65

Pour une tension alternative en entrée du redresseur 4 comprise entre 80 et 150 $V_{ac}$.

- Si $V_{Omin}$ est égal à 3 $V_{dc}$ et $V_{0max}$ est égal à 12 $V_{dc}$ alors $m$ est compris entre 0,008 et 0,2.
- Si $V_{Omin}$ est égal à 3 $V_{dc}$ et $V_{0max}$ est égal à 24 $V_{dc}$ alors $m$ est compris entre 0,015 et 0,35
- Si $V_{Omin}$ est égal à 3 $V_{dc}$ et $V_{0max}$ est égal à 42 $V_{dc}$ alors $m$ est compris entre 0,03 et 0,6.

Le fonctionnement d'un convertisseur tel que décrit précédemment va maintenant être décrit à l'aide de la figure 1.

Lorsqu'un opérateur souhaite modifier la tension continue de sortie $V_0$, il sélectionne, à l'aide du circuit de sélection 60 la nouvelle tension de sortie. En réponse, le circuit de sélection 60 modifie la valeur de la référence de tension 66. Le circuit intégré 64 génère alors en fonction de la tension continue de sortie actuelle $V_0$ et de la nouvelle valeur de la référence de tension 66, un signal de commande qui contrôle le temps de conduction de l'interrupteur 42 de manière à obtenir en sortie du convertisseur une nouvelle tension continue de sortie correspondant à la nouvelle valeur de la référence de tension 66.

Le temps de conduction de l'interrupteur 42 est fonction du rapport cyclique $D$. Le rapport cyclique $D$ est relié à la tension continue de sortie $V_0$ selon les relations suivantes. Lorsque la tension continue de sortie $V_0$ est proche de son minimum, le convertisseur indirect 6 fonctionne en mode continu et la relation suivante relie $V_0$ au rapport cyclique $D$ :

$$V_0 = V_e.m.D/(1-D)$$

Par conséquent plus le rapport cyclique $D$ augmente plus la tension $V_0$ augmente.

Lorsque la tension $V_0$ atteint un seuil pour lequel la relation suivante est vérifiée : $t_{on}$ + t = $T$, le convertisseur indirect 6 passe alors en mode de fonctionnement discontinu et la relation suivante relie $V_0$ au rapport cyclique $D$ :

$$V_0 = K_{dp}.V_e.m.D/(1-D)$$

En mode de fonctionnement discontinu, le rapport cyclique $D$ est proche de son maximum et la très basse tension de sortie $V_0$ est essentiellement fixée par l'impédance de la charge raccordée entre les bornes 18, 20. Ainsi, tant que la puissance maximale du convertisseur 2 n'est pas dépassée, le circuit de réglage 8 agît sur le rapport cyclique $D$ essentiellement pour réguler la tension de sortie $V_0$.

Lorsqu'un opérateur souhaite modifier la valeur limite de l'intensité maximale du courant $i0$, il sélectionne à l'aide du circuit de sélection 62 la nouvelle intensité maximale du courant $i0$. De façon similaire à ce qui a été décrit pour un changement de la tension de sortie $V_0$, le circuit de réglage 8 génère alors un signal de commande prenant en compte la nouvelle valeur de la référence de courant 68.

Avantageusement, lorsque l'opérateur n'agit pas sur les circuits de sélection 60, 62, le circuit de réglage 8 régule automatiquement les caractéristiques de la tension de sortie en fonction de la valeur de la référence de tension 66 et de la référence de courant 68. La très basse tension délivrée en sortie est ainsi plus stable.

L'invention concerne en outre un procédé pour faciliter la détermination du rapport d'enroulement m en fonction des tensions continues $V_{Omin}$ et $V_{0max}$ encadrant les tensions continues souhaitées eh sortie. Le rapport d'enroulement m détermine en grande partie l'étendue de la plage de variation de la tension continue de sortie du convertisseur indirect. Or, il est difficile de déterminer un rapport d'enroulement m correspondant à une plage de tensions de sortie comprises entre les tensions $V_{Omin}$ et $V_{0max}$ car une valeur de m trop petite conduit à une plage de tensions de sortie trop faible et une valeur de m trop élevée n'est pas réalisable. En effet, la relation suivante relie le rapport d'enroulement m et le rapport cyclique $D$ :

$$D = V_{Omin}/(V_{Omin} + V_e \,.m)$$

Dans la relation précédente si m est proche de 0 alors le rapport cyclique $D$ correspondant à la tension $V_{Omin}$ est proche de 1. Ceci conduit à une faible plage de variation entre un rapport cyclique $D$ correspondant à la tension $V_{Omin}$ et un rapport cyclique $D$ correspondant à la tension $V_{0max}$. Dans ces conditions $V_{Omin}$ et $V_{0max}$ sont proches l'un de l'autre.

Par ailleurs si le rapport d'enroulement m est grand, c'est-à-dire par exemple supérieur à 0,5, le rapport cyclique $D$ est proche de 0. Or ceci n'est pas réalisable car l'interrupteur 42 à un temps de conduction $t_{on}$ minimum à respecter.

Avantageusement le circuit de réglage 8 permet de contrôler à la fois la tension continue de sortie $V_0$ et l'intensité maximale du courant de sortie $i0$. Il est donc possible d'utiliser un tel convertisseur 2 pour recharger des batteries et notamment des batteries de téléphone portable. De plus, un tel convertisseur s'adapte à différents types de batterie.

**Revendications**

1. Convertisseur de tension (2) apte à délivrer en sortie plusieurs très basses tensions continues de sécurité comprenant un convertisseur indirect (6), ledit convertisseur indirect (6) comportant, d'une part un transformateur (24) équipé d'un enroulement primaire (26) adapté pour être raccordé à une source de tension continue d'entrée, et d'autre part un interrupteur (42) dont le temps de conduction est contrôlable, le convertisseur de tension (2) comportant en outre un circuit de pilotage (58) du temps de conduction de l'interrupteur (42), **caractérisé en ce qu'**il comporte, raccordé au circuit de pilotage (58), un premier circuit de sélection (60) d'une très basse tension continue de sécurité parmi lesdites plusieurs très basses tensions continues de sécurité, **en ce que** le circuit de pilotage (58) est adapté pour modifier le temps de conduction de l'interrupteur (42) sous la commande dudit premier circuit de sélection (60) en fonction de ladite très basse tension continue de sécurité sélectionnée, **en ce que** le transformateur (24) comporte un seul enroulement secondaire (28) à partir duquel sont délivrées les dites plusieurs très basses tensions continues de sécurité, et **en ce que** le circuit de pilotage (58) commande un mode de fonctionnement où le courant ($i_1$) dans l'enroulement primaire a une valeur sensiblement nulle au début de chaque intervalle de temps de conduction, ou sélectivement un mode de fonctionnement où le courant ($i_1$) a une valeur non-nulle ($I_m$) au début de chaque intervalle de temps de conduction.

2. Convertisseur de tension (2) selon la revendication 1, **caractérisé en ce qu'**il comporte un second circuit de sélection (62) d'une intensité maximale de courant en sortie du convertisseur de tension (2), et en ce le circuit de pilotage (58) est adapté pour être contrôlé par le second circuit de sélection (62) en fonction de ladite intensité maximale de courant en sortie du convertisseur.

3. Convertisseur de tension (2) selon la revendication 1 ou 2, **caractérisé en ce qu'**il comporte un redresseur (4) raccordé à l'entrée du convertisseur indirect (6), et **en ce que** ledit redresseur (4) est adapté pour être raccordé à la sortie d'une source de tension alternative.

4. Convertisseur de tension (2) selon la revendication 3, **caractérisé en ce qu'**il est apte à délivrer plusieurs très basses tensions continues de sécurité comprises entre 3 $V_{dc}$ et 42 $V_{dc}$ à partir d'une tension alternative comprise entre 190 $V_{ac}$ et 250 $V_{ac}$ présente en entrée du redresseur (4), et **en ce que** le rapport d'enroulement m du nombre de spires de l'enroulement secondaire (28) sur le nombre de spires de l'enroulement primaire (26) est compris entre 0,036 et 0,65.

5. Convertisseur de tension (2) selon la revendication 3, **caractérisé en ce qu'**il est apte à délivrer plusieurs très basses tensions continues de sécurité comprises entre 3 $V_{dc}$ et 24 $V_{dc}$ à partir d'une tension alternative comprise entre 190 $V_{ac}$ et 250 $V_{ac}$ présente en entrée du redresseur (4), et **en ce que** le rapport d'enroulement m du nombre de spires d'enroulement secondaire (28) sur le nombre de spires de l'enroulement primaire (26) est compris entre 0,02 et 0,45.

6. Convertisseur de tension (2) selon la revendication 3, **caractérisé en ce qu'**il est apte à délivrer plusieurs très basses tensions continues de sécurité comprises entre 3 $V_{dc}$ et 12 $V_{dc}$ à partir d'une tension alternative comprise entre 190 $V_{ac}$ et 250 $V_{ac}$ présente en entrée du redresseur (4), et **en ce que** le rapport d'enroulement m du nombre de spires de l'enroulement secondaire (28) sur le nombre de spires de l'enroulement primaire (26) est compris entre 0,01 et 0,2.

7. Convertisseur de tension (2) selon la revendication 3, **caractérisé en ce qu'**il est apte à délivrer plusieurs très basses tensions continues de sécurité comprises entre 3 $V_{dc}$ et 42 $V_{dc}$ à partir d'une tension alternative comprise entre 80 $V_{ac}$ et 150 $V_{ac}$ présente en entrée du redresseur (4), et **en ce que** le rapport d'enroulement m du nombre de spires de l'enroulement secondaire (28) sur le nombre de spires de l'enroulement primaire (26) est compris entre 0,03 et 0,6.

8. Convertisseur de tension (2) selon la revendication 3, **caractérisé en ce qu'**il est apte à délivrer plusieurs très basses tensions continues de sécurité comprises entre 3 $V_{dc}$ et 24 $V_{dc}$ à partir d'une tension alternative comprise entre 80 $V_{ac}$ et 150 $V_{ac}$ présente en entrée du redresseur (4), et **en ce que** le rapport d'enroulement m du nombre de spires de l'enroulement secondaire (28) sur le nombre de spires de l'enroulement primaire (26) est compris entre 0,015 et 0,35.

9. Convertisseur de tension (2) selon la revendication 3, **caractérisé en ce qu'**il est apte à délivrer plusieurs très basses tensions continues de sécurité comprises entre 3 $V_{dc}$ et 12 $V_{dc}$ à partir d'une tension alternative comprise entre 80 $V_{ac}$ et 150 $V_{ac}$ présente en entrée du redresseur (4) et **en ce que** le rapport d'enroulement m du nombre de spires de l'enroulement secondaire (28) sur le nombre de spires de l'enroulement primaire (26) est compris entre 0,008 et 0,2.

10. Convertisseur de tension (2) selon l'une quelconque des revendications précédentes, **caractérisé en ce que** ledit convertisseur indirect (6) comporte une diode (50) dont l'anode est raccordée à une première extrémité (34) de l'enroulement secondaire (28) et dont la cathode est raccordée à une première borne (18) de sortie des très basses tensions continues de sécurité, et **en ce qu'**il comporte un rapport d'enroulement m entre le nombre de spires de l'enroulement secondaire (28) sur le nombre de spires de l'enroulement primaire (26) déterminé à partir de la relation suivante :

$$m = [(V_{0min} + V_{d1})/(V_{emin}-V_{ds})] \cdot [(V_{emin} - V_{ds})/(K_{rp} \cdot L_p \cdot f \cdot I_p))-1]$$

où :

- $V_{0min}$ est la plus petite très basse tension continue de sécurité en sortie du convertisseur de tension (2),
- $V_{d1}$ est la chute de tension aux bornes de la diode (50) lorsque celle-ci conduit,
- $V_{emin}$ est le minimum de la tension continue en entrée du convertisseur indirect(6);
- $V_{ds}$ est la chute de tension aux bornes de l'interrupteur (42) lorsque celui-ci conduit,
- $L_p$ est l'inductance de l'enroulement primaire (26),
- $I_p$ est l'intensité maximale du courant traversant l'interrupteur (42),
- $f$ est la fréquence de fonctionnement de l'interrupteur (42),
- $K_{rp}$ est le rapport entre l'amplitude maximale des variations de l'intensité du courant traversant l'interrupteur (42) et l'intensité maximale $I_p$ du courant traversant ce même interrupteur.

11. Prise murale, **caractérisée en ce qu'**elle comporte un convertisseur de tension (2) selon l'une quelconque des revendications précédentes.

_FIG.1_

*FIG.2*

Office européen
des brevets

**RAPPORT DE RECHERCHE EUROPEENNE**

Numéro de la demande

EP 03 29 0051

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 757 428 A (HEWLETT-PACKARD COMPANY) 5 février 1997 (1997-02-05) * abrégé * * colonne 1, ligne 27 - ligne 53 * * figures 2,5,14 * | 1-11 | H02M3/335 |
| X | US 6 373 726 B1 (ANTOIN RUSSELL) 16 avril 2002 (2002-04-16) * abrégé * * figures 2,4 * | 1-11 | |
| A | US 4 612 610 A (ROBERT P. FARNSWORTH ET AL.) 16 septembre 1986 (1986-09-16) * figure 2 * * colonne 6, ligne 20 - ligne 23 * | 1 | |
| A | US 5 777 503 A (RICHARD A. FAULK) 7 juillet 1998 (1998-07-07) * figures 3,5 * * colonne 3, ligne 40 - colonne 4, ligne 9 * | 1 | |
| A | US 5 537 021 A (SIMON H. WEINBERG ET AL.) 16 juillet 1996 (1996-07-16) * colonne 6, ligne 20 - ligne 24 * | 1 | DOMAINES TECHNIQUES RECHERCHES (Int.Cl.7) H02M |
| A | EP 0 505 982 A (HITACHI LTD.) 30 septembre 1992 (1992-09-30) * abrégé * * figures 1-5 * | 3 | |

Le présent rapport a été établi pour toutes les revendications

| Lieu de la recherche | Date d'achèvement de la recherche | Examinateur |
|---|---|---|
| La Haye | 5 novembre 2003 | Lund, M |

EP 1 437 824 A1

ANNEXE AU RAPPORT DE RECHERCHE EUROPEENNE
RELATIF A LA DEMANDE DE BREVET EUROPEEN NO.

EP 03 29 0051

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

05–11–2003

| Document brevet cité au rapport de recherche | | Date de publication | Membre(s) de la famille de brevet(s) | | Date de publication |
|---|---|---|---|---|---|
| EP 0757428 | A | 05–02–1997 | EP | 0757428 A1 | 05–02–1997 |
| | | | AT | 173569 T | 15–12–1998 |
| | | | DE | 69506096 D1 | 24–12–1998 |
| | | | DE | 69506096 T2 | 15–04–1999 |
| | | | JP | 9107676 A | 22–04–1997 |
| | | | US | 5608613 A | 04–03–1997 |
| US 6373726 | B1 | 16–04–2002 | DE | 29901322 U1 | 08–07–1999 |
| | | | DE | 10002147 A1 | 03–08–2000 |
| | | | GB | 2346272 A ,B | 02–08–2000 |
| | | | GB | 2366098 A ,B | 27–02–2002 |
| US 4612610 | A | 16–09–1986 | CA | 1245284 A1 | 22–11–1988 |
| | | | DE | 3566335 D1 | 22–12–1988 |
| | | | EP | 0173697 A1 | 12–03–1986 |
| | | | IL | 74292 A | 31–05–1988 |
| | | | IT | 1181764 B | 30–09–1987 |
| | | | JP | 6055031 B | 20–07–1994 |
| | | | JP | 61501605 T | 31–07–1986 |
| | | | TR | 22121 A | 01–05–1986 |
| | | | WO | 8504059 A1 | 12–09–1985 |
| US 5777503 | A | 07–07–1998 | AUCUN | | |
| US 5537021 | A | 16–07–1996 | EP | 0534013 A1 | 31–03–1993 |
| | | | AT | 150597 T | 15–04–1997 |
| | | | DE | 69125280 D1 | 24–04–1997 |
| | | | DE | 69125280 T2 | 14–08–1997 |
| | | | DK | 534013 T3 | 07–04–1997 |
| | | | ES | 2102383 T3 | 01–08–1997 |
| | | | JP | 5316665 A | 26–11–1993 |
| EP 0505982 | A | 30–09–1992 | JP | 4299070 A | 22–10–1992 |
| | | | EP | 0505982 A1 | 30–09–1992 |

EPO FORM P0460

Pour tout renseignement concernant cette annexe : voir Journal Officiel de l'Office européen des brevets, No.12/82

15